# EUROPEAN PATENT APPLICATION

(11) **EP 3 082 091 A1**
(43) Date of publication of application: **19.10.2016**
(21) Application number: 15200009.7
(22) Date of filing: 15.12.2015
(51) Int. Cl.: G06Q 30/02, G08B 13/14, G08B 13/24

(54) **APPARATUS, SYSTEM AND METHOD FOR WIRELESSLY COLLECTING DATA CORRESPONDING TO A SECURITY DEVICE**

(30) Priority: 17.04.2015 US 201514689660; 17.04.2015 US 201514689727; 14.09.2015 US 201514853666
(71) Applicant: Sennco Solutions, Inc., Plainfield, Illinois 60544 (US)
(72) Inventor: MARSZALEK, Christopher, Plainfield, Illinois 60585 (US); LIFF, Dale Russell, Kent, Ohio 44240 (US); STROM, Stephen Michael, North Olmsted, Ohio 44070 (US); JOHNSON, Bill, Arlington Heights, Illinois 60005 (US); BERLAND, Kerry, Arlington Heights, Illinois 60005 (US); KMIECIK, Mark, Arlington Heights, Illinois 60005 (US)
(74) Representative: Beck Greener

(57) **Abstract**

An apparatus, a system and/or a method provide for wirelessly collecting data corresponding to a product attached to a security device. The security device associated with the product transmits wireless signals throughout a display area. A computer remotely positioned from the security device receives the wireless signals and stores status data of the security device. The computer wirelessly transmits the status data to a remote server, and the remote server determines statistical data from the status data. The remote server stores the statistical data in a database and facilitates user access to the data.

## Description

### BACKGROUND OF THE INVENTION

The present invention relates to an apparatus, a system and a method for wirelessly collecting data corresponding to a product attached to a security device.

A product may be displayed in, for example, a retail store for a consumer to evaluate the product. A security device often affixes to a product to prevent and/or deter theft of the product. A consumer may, for example, lift and/or inspect a product on display to assess its function and/or aesthetics. For example, a consumer may conduct a tactile evaluation and assess the feel, weight, functionality and/or the like of a product. Generally, many consumers may perform such inspections of the same product. Some consumers may conduct a thorough evaluation of a product, whereas others may evaluate the product for a brief duration. Further, some products may be evaluated frequently, whereas other products have infrequent and/or short interactions with the consumer. Some consumers may ultimately purchase a product after conducting an evaluation. Retailers and/or manufacturers may desire analytic information pertaining to consumer interaction with a product as such information may further guide point-of-sale marketing. However, gauging consumer interest in a product may be expensive, time consuming, difficult to implement, and/or prone to error. Therefore, data pertaining to instances that a consumer evaluates a product is often unavailable.

Retailers and/or manufacturers may have point-of-sale data. Such data, however, is generally limited to a purchase of a product. Moreover, retailers and/or manufacturers may desire more statistical data. For example, data including the quantity of times a certain product is evaluated, the frequency of evaluations, the respective times of day of each evaluation and/or the duration of each respective evaluation, may assist retailers and/or manufacturers in quantifying consumer interest in a certain product. Additionally, such data may focus sales efforts. Manufacturers and/or retailers may desire to obtain such data quickly and/or automatically. Still further, the ability to provide such data to a source remote from the display area may be desirable.

A security device may be affixed to a product in many ways. The security device may be attached by an adhesive and/or by a cable to tether the product to a display base. Generally, the tethered cable may have a predefined length and/or may be retractable. Tethering may allow the consumer to manipulate the product; however, tethering simultaneously may confine the available degrees of freedom of manipulation of the product. Retailers, vendors, and/or manufacturers may detach the cable from the security device via a key, for example, to allow the consumer to evaluate the product in a less restricted manner. Moreover, a consumer may assess the suitability of a certain product when the product is detached from a cable and/or a security base. For example, a consumer may place a product, such as a mobile device, in a pocket to assess its weight, characteristics and/or aesthetics.

Often, manufacturers and/or retailers may desire information regarding position and/or alarm status of a product attached to a security device. Further, manufacturers and/or retailers may desire information regarding, for example, a respective key that configured a security device.

A need, therefore, exists for an apparatus, system and method for wirelessly collecting data corresponding to a product attached to a security device.

### SUMMARY OF THE INVENTION

The present invention relates to an apparatus, a system and a method for wirelessly collecting data corresponding to a product attached to a security device. The apparatus, the system and/or the method may have an analytics module that may capture status data transmitted in a wireless network. The analytics module may collect the status data and/or determine one or more statistics from the status data. More specifically, the security device may transmit position data, alarm data, and/or battery data. The analytics module may collect the status data and determine statistical data, such as, for example, the quantity of evaluations, the duration of each evaluation, the frequency of evaluations and/or the time of each evaluation of the product. The analytics module may present the statistical data to a user and/or may transmit the statistical data to a remote system for further data collection and/or data analysis.

To this end, in an embodiment of the present invention, a system for wirelessly collecting data corresponding to a product on a display for purchase of the product is provided. A security device may be attached to the product, and, a first transceiver may be associated with the security device. The first transceiver may wirelessly transmit status data. The status data may be indicative of a position of the product. An analytics module may be positioned remotely from the security device. The analytics module may receive the status data and may determine statistical data from the status data. The statistical data may be indicative of a number of lifts of the product. The lift may correspond to removal of the product from the position.

In an embodiment, a second transceiver may be associated with the analytics module. The second transceiver may wirelessly transmit the statistical data.

In an embodiment, a base may be associated with the display. The base may dock the security device.

In an embodiment, an alarm may be associated with the security device The alarm may produce a signal indicative of a disconnect of the security device from the product.

In an embodiment, a computer may be connected to the analytics module. The computer may collect the statistical data.

In an embodiment, an alarm module may receive the status data.

In another embodiment, an apparatus for wirelessly collecting data corresponding to a product connected to a security device wherein the product may be in a static position and removable to a lifted position may be provided. An analytics module may be positioned remotely from the security device. The analytics module may receive status data from the security device, and the status data may be indicative of whether the product may be in the static position or the lifted position. The analytics module may determine statistical data from the status data. A transceiver may be associated with the analytics module, and the transceiver may wirelessly transmit the statistical data.

In an embodiment, a computer may be connected to the analytics module. The analytics module may transmit the statistical data to the computer.

In an embodiment, an alarm module may be positioned remotely from the security device, and the security device may transmit a wireless signal to the alarm module.

In an embodiment, an emitter may be positioned remotely from the security device. The emitter may transmit a wireless signal to the security device.

In an embodiment, a clock may be associated with the analytics module. The clock may identify a time of day of removal of the product from the static position.

In an embodiment, a memory may be associated with the analytics module. The memory may store the statistical data.

In another embodiment, a method for wirelessly collecting data corresponding to a product connected to a security device may be provided. The method may have the steps of receiving a wireless signal from the security device wherein the wireless signal may convey status data wherein the status data may be indicative of a position of the product; determining a lift of the product wherein the lift may correspond to removal of the product from the position; determining statistical data from the status data wherein the statistical data may be indicative of a number of lifts of the product; and wirelessly transmitting the statistical data.

In an embodiment, the method may have the step of determining an evaluation duration of the product that may be indicative of a time of the lift of the product.

In an embodiment, the method may have the step of determining a removal time of the product that may be indicative of a time of day of the lift of the product.

In an embodiment, the method may have the step of activating an alarm when the security device may be removed from the product.

In an embodiment, the method may have the step of determining an evaluation frequency that may be indicative of a number of times the product may be lifted.

In an embodiment, the method may have the step of determining an alarm frequency that may be indicative of a number of times an alarm associated with the security device may be triggered.

In an embodiment, the method may have the step of storing the statistical data in a memory.

In an embodiment, the method may have the step of receiving a request for the statistical data.

It is, therefore, an advantage of the present invention to provide a system, an apparatus and/or a method for wirelessly collecting data corresponding to a product attached to a security device.

Another advantage of the present invention is to provide a system, an apparatus and/or a method that may detect a lift of a product and/or the time of day of the lift.

Yet another advantage of the present invention is to provide a system, an apparatus and/or a method that may determine the number of lifts of a product.

Further, an advantage of the present invention is to provide a system, an apparatus and/or a method for determining the duration of a lift of a product.

Still further, an advantage of the present invention is to provide a system, an apparatus and/or a method that may determine the frequency of lifts of a product.

A further advantage of the present invention is to provide a system, an apparatus and/or a method that may detect an alarm condition of a product attached to a security device.

Yet another advantage of the present invention is to provide a system, an apparatus and/or a method that may log data indicating a key that may have disarmed the security device.

Further, an advantage of the present invention is to provide a system, an apparatus and/or a method that may correlate statistical data with sale data.

Another advantage of the present invention is to provide a system, an apparatus and/or a method that may determine and/or collect statistical data corresponding to a product attached to a security device.

Moreover, an advantage of the present invention is to provide a system, an apparatus and/or a method that may display statistical data to a user.

Another advantage of the present invention is to provide a system, an apparatus and/or a method that may update statistical data in real time.

Further, an advantage of the present invention is to provide a system, an apparatus and/or a method that may transmit statistical data to a remote device.

Another advantage of the present invention is to provide a system, an apparatus and/or a method that may provide statistical data to a remote device for collection in real time.

Additional features and advantages of the present invention are described in, and will be apparent from, the detailed description of the presently preferred embodiments and from the drawings.

### DESCRIPTION OF THE DRAWINGS

FIG. 1 illustrates a perspective view of a system for collecting data corresponding to a product attached to a security device in an embodiment of the present invention.
FIG. 2 illustrates a perspective view of a system for collecting data corresponding to a product attached to a security device wherein the product may be in a lifted position in an embodiment of the present invention.
FIG. 3 illustrates a perspective view of components of the system for collecting data corresponding to a product attached to a security device in an embodiment of the present invention.
FIG. 4 illustrates a block diagram of an analytics module in an embodiment of the present invention.
FIG. 5 illustrates a block diagram of a security device in an embodiment of the present invention.
FIG. 6 illustrates a perspective view of an alarm module and a key in an embodiment of the present invention.
FIG. 7 illustrates a block diagram of an alarm module in an embodiment of the present invention.
FIG. 8 illustrates a flowchart for logging an evaluation of a product in an embodiment of the present invention.
FIG. 9 illustrates a flowchart for logging a duration of an evaluation in an embodiment of the present invention.
FIG. 10 illustrates a flowchart for logging a frequency of evaluations in an embodiment of the present invention.
FIG. 11 illustrates a flowchart for logging an alarm condition in an embodiment of the present invention.
FIG. 12 illustrates a flowchart for logging sale data in an embodiment of the present invention.
FIG. 13 illustrates a perspective view of a system for wirelessly collecting and/or transmitting data in an embodiment of the present invention.
FIG. 14A illustrates a perspective view of a system for collecting data corresponding to a product attached to a security device in an embodiment of the present invention.
FIG. 14B illustrates a perspective view of a system for collecting data corresponding to a product attached to a security device in another embodiment of the present invention.
FIG. 15 illustrates a block diagram of components of a system for collecting data corresponding to a product attached to a security device in an embodiment of the present invention.
FIG. 16 illustrates a block diagram of components of a system for collecting data corresponding to a product attached to a security device in an embodiment of the present invention.
FIG. 17 illustrates a black box diagram of components of a system for collecting data corresponding to a product attached to a security device in an embodiment of the present invention.
FIG. 18 illustrates a flowchart for processing data with a computer in an embodiment of the present invention.
FIG. 19 illustrates a flowchart for processing data with a network in an embodiment of the present invention.
FIG. 20 illustrates a block diagram of a security device in an embodiment of the present invention.
FIG. 21 illustrates a flowchart for provisioning data with a network in an embodiment of the present invention.

### DETAILED DESCRIPTION

The present invention generally relates to an apparatus, a system and a method for wirelessly collecting data corresponding to a product attached to a security device. A computer may wirelessly transmit status data to a remote server, and the remote server may determine statistical data from the status data. The remote server may store the statistical data in a database and may facilitate user access to the data.

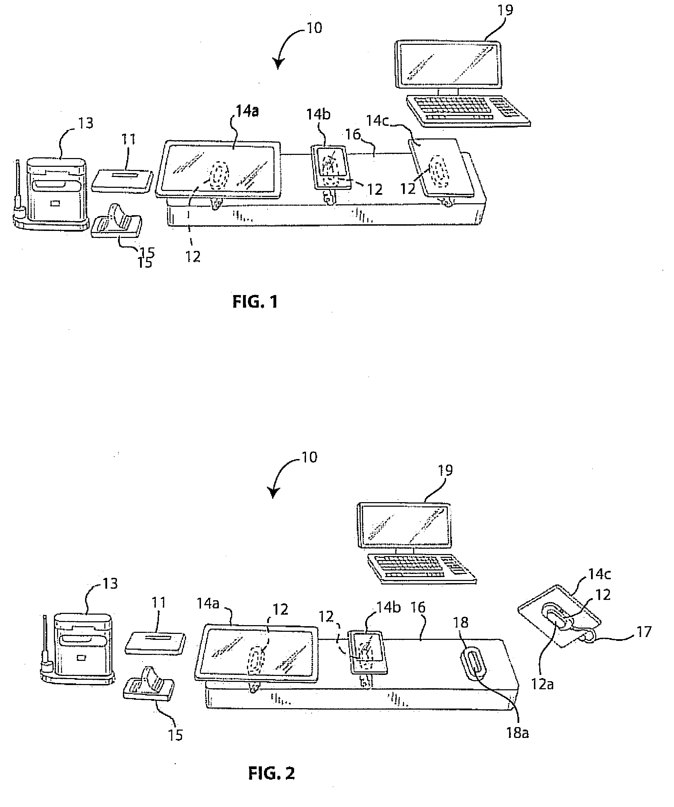

Referring now to the drawings wherein like numerals refer to like parts, FIG. 1 illustrates a system 10 in which an embodiment of the present invention may be implemented. The system 10 may have a product 14A, a product 14B and/or a product 14C that may be positioned and/or located on a display 16, for example, in a retail store, for consumer evaluation. Hereinafter, the product 14A, the product 14B and/or the product 14C will be referred to, collectively, as the product 14. The product 14 may be a portable electronic device, such as, for example, a cellular telephone, tablet computer, MP3 player, camera, GPS device and/or the like. However, it should be understood that the product 14 may be any device displayed and/or sold at, for example, a retail store. Moreover, the product 14 may be a non-electronic item.

A security device 12 may be affixed to the product 14, for example, via an adhesive, and may dock to a base 18, as shown in FIG. 2, that may be located on the display 16. The base 18 may have a recess 18A that may receive the security device 12. For example, the security device 12 may have an extended portion 12A that may dock within the recess 18A of the base 18. When the security device 12 may be docked, the base 18 may provide power to and/or charge the security device 12 and/or the product 14. On the display 16, the product 14 and/or the security device 12 may be presented in a docked position, i.e., the product 14 and/or the security device 12 may be docked to the base 18. In a retail environment, for example, a consumer may lift the product 14 and the security device 12 from the base 18, as shown in FIG. 2. It should be understood that the lift of the product 14 correspondingly results in the lift of the security device 12. The consumer may evaluate the product 14 and, when finished, may return the product 14 to the base 18.

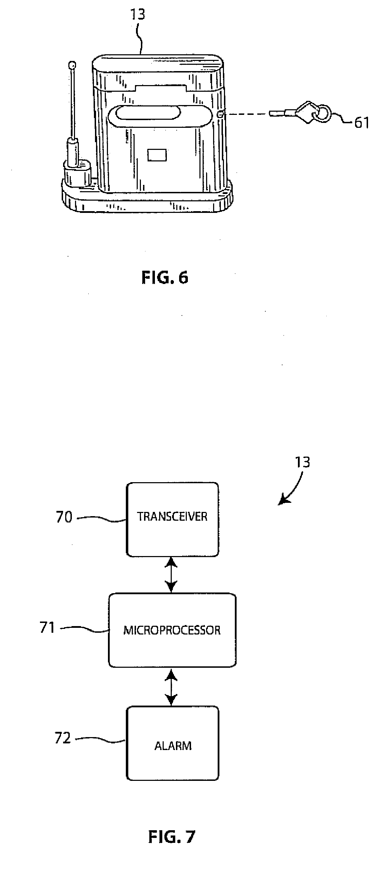

In another embodiment of the present invention, the security device 12 may tether the product 14 to the display 16. For example, a retractable cable (not shown) may extend from the security device 12 to the base 18. The base 18 and/or the retractable cable may provide power to the security device 12 and/or to the product 14. Moreover, the retractable cable may be disconnected from the security device 12 via a key 61, such as the key 61 as shown in FIG. 6A. To reconnect the security device 12 to the retractable cable, the security device 12 may be placed on the base 18. After reconnecting to the base 18 and/or the retractable cable, the security device 12 and/or the product 14 may resume charging.

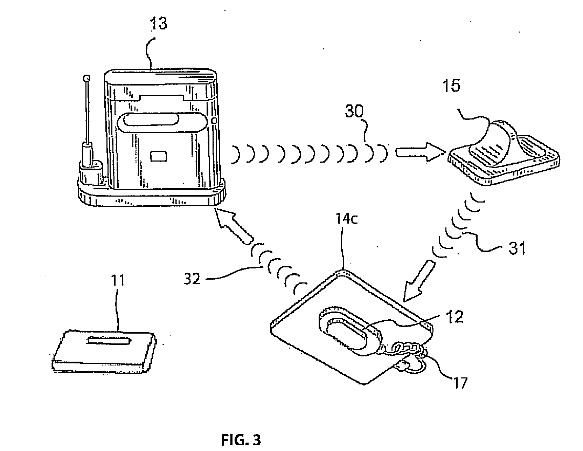

As shown in FIG. 1, the system 10 may also have an analytics module 11, an alarm module 13 and/or an emitter 15. To maintain security when the security device 12 may be detached from the retractable cable and/or the base 18, the security device 12 may wirelessly communicate, as shown in FIG. 3, with the alarm module 13, the analytics module 11 and/or the emitter 15. Data communication among the various components within the system 10 may be implemented in accordance with a wireless networking protocol, e.g. IEEE 802.11. The analytics module 11, the alarm module 13 and/or the emitter 15 may be positioned near the display 16 of the product 14. A computer 19, such as, for example, a laptop computer, may be positioned near the display 16, and may be connected to the analytics module 11, the alarm module 13 and/or the emitter 15.

In an embodiment of the present invention, and as shown in FIG. 3, the alarm module 13 may, for example, be programmed to transmit a low frequency signal 30 to the emitter 15 that may request the emitter 15 to transmit a low frequency signal 31 to the security device 12. If the security device 12 is within range of the emitter 15, the security device 12 may receive the low frequency signal 31 from the emitter 15 that may request the security device 12 to transmit a signal to the alarm module 13. The security device 12 may be programmed to then transmit a high frequency signal 32 to the alarm module 13 that may indicate that the security device 12 may be located within a range of the emitter 15. Alternatively, if the security device 12 may be located outside of the range of the emitter 15, the security device 12 may fail to receive the low frequency signal 31 from the emitter 15 and may thus fail to transmit the high frequency signal 32 to the alarm module 13. The alarm module 13 may be programmed to produce an audio alarm and/or a visual alarm if the alarm module 13 fails to receive the high frequency signal 32 from the security device 12. Additionally, the security device 12 may be programmed to emit an audio alarm and/or a visual alarm if the security device 12 fails to receive the low frequency signal 31 from the emitter 15.

In another embodiment of the present invention, the alarm module 13 may monitor a received signal strength indicator (RSSI) of a wireless signal transmitted from the security device 12 to determine the proximity of the security device 12 to the alarm module 13 and/or the emitter 14. Alternatively, in another embodiment of the present invention, the security device 12, the emitter 14, and/or the alarm module 13 may communicate via ultra-wideband. In such embodiments, the distance between the security device 12, the emitter 14, and/or the alarm module 13 may be determined by monitoring a time of flight (TOF) of the various wireless signals between the various transceivers.

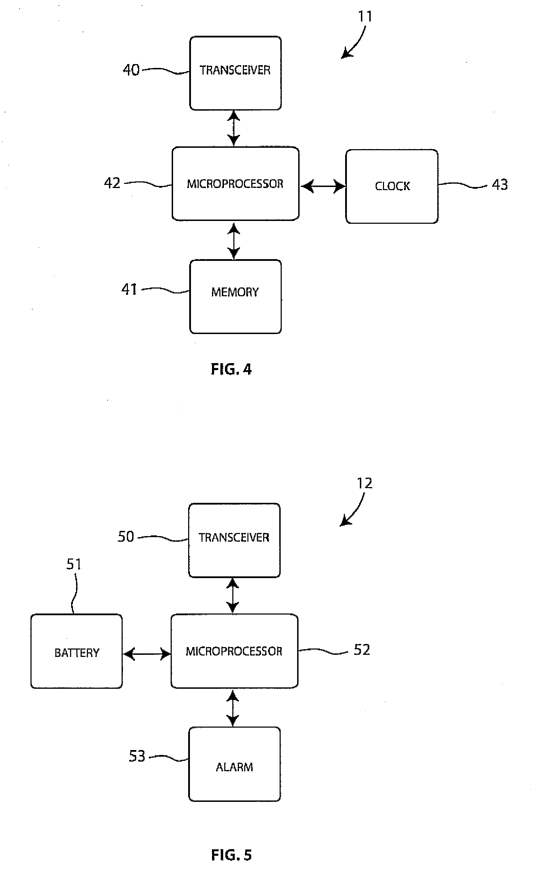

As shown in FIGS. 1 and 4, the analytics module 11 may be programmed to monitor and/or to collect data within the system 10. In an embodiment of the present invention, the analytics module 11 may be placed and/or mounted near the display 16 of the product 14. As shown in FIG. 4, the analytics module 11 may have electronic components. For example, the analytics module 11 may have a transceiver 40 to transmit and/or to receive wireless signals. Additionally, a microprocessor 42 may be programmed to monitor, to capture and/or to log data communicated in the system 10. For example, the analytics module 11 may be programmed to capture data transmitted from the security device 12, the alarm module 13 and/or the emitter 15. In an embodiment of the present invention, the analytics module 11 may be connected to the alarm module 13. A memory 41, e.g. NVRAM, EEPROM, DDR4 SDRAM and/or the like, may store the data for data collection and/or for analysis.

In an embodiment of the present invention, the microprocessor 42 of the analytics module 11 may be programmed to manipulate the captured data and/or to determine statistical data. Statistical data may be, for example, indicative of a quantity of lifts of the product, a frequency of lifts of the product and/or a duration of lifts of the product. A clock 43 of the analytics module 11 may identify the time of day of a lift, the time of day of a return and/or may time a lift duration.

As shown in FIGS. 1 and 5, the security device 12 may be programmed to wirelessly transmit status data in the system 10 using a high frequency signal. The status data may be, for example, position status and/or alarm status of the security device 12. The security device 12 may be attached to the product 14, for example, via an adhesive. Further, the security device 12 may be electrically connected to a port (not shown) of the product 14 via, for example, a USB cable 17. Removal of the security device 12 from the product 14 and/or removal of the USB cable 17 from the port of the security device 12 may activate an alarm 53 of the security device 12. Alarm 53 may produce an audio alarm and/or a visual alarm. In the docked position, as shown in FIG. 1, the security device 12 and/or the product 14 may receive power via the base 18 and/or the retractable cable. As shown in FIG. 5, the security device 12 may have a transceiver 50 to transmit and/or receive wireless signals. The alarm 53 of the security device 12 may activate if the security device 12, for example, fails to receive the low frequency signal 31 from the emitter 15. When the security device 12 may be removed from the docked position, as shown in FIG. 2, a rechargeable battery 51, e.g. lithium-ion, NiMH, NiCd and/or the like, of the security device 12 may provide power to the security device 12 and/or the product 14. Additionally, the security device 12 may have a microprocessor 52 that may be programmed, for example, to detect a position status and/or an alarm status of the security device 12.

As shown in FIG. 6, the alarm module 13 may be configured using a key 61. For example, the key 61 may deactivate an alarm condition of the alarm module 13. As shown in FIG. 7, the alarm module 13 may have electronic components. For example, a transceiver 70 may transmit and/or receive wireless signals. Further, the alarm module 13 may have a microprocessor 71 that may be programmed to detect the high frequency signal 32 and/or transmit, via the transceiver 70, the low frequency signal 30. Additionally, the microprocessor 71 may be programmed to activate an alarm 72 during an alarm condition of the alarm module 13 and/or of the security device 12. The alarm 72 may produce an audio alarm and/or a visual alarm.

The emitter 15 may have a transceiver (not shown) to transmit and/or receive wireless signals. Additionally, the emitter may have a microprocessor (not shown) that may be programmed to receive and/or detect the low frequency signal 30 from the alarm module 13. Further, the microprocessor of the emitter 15 may be programmed to transmit, via the transceiver of the emitter 15, the low frequency signal 31.

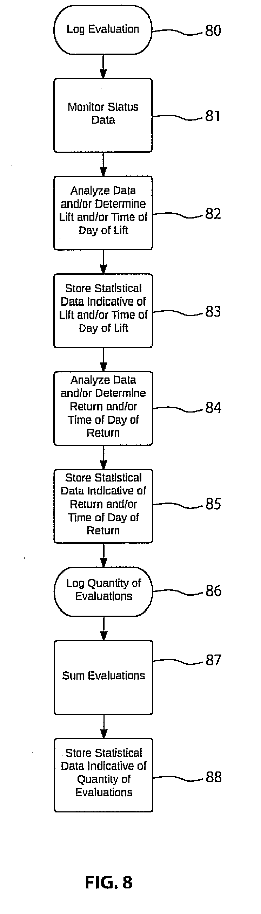

In a retail store, for example, the analytics module 11 may be programmed to monitor status data transmitted in the system 10 and/or to determine statistical data corresponding to the product 14. For example, in an embodiment of the present invention, and as shown in FIG. 8 at step 80, the analytics module 11 may be programmed to log an evaluation of the product 14. As shown in FIG. 1, the product 14 may be displayed in a static, i.e., docked, position on the display 16 and/or the base 18. As shown in FIG. 2, a consumer may lift the product 14 from the display 16 and/or the base 18. The microprocessor 52 of the security device 12 may be programmed to detect the lift of the product 14 from the base 18. After the lift of the product 14 from the base 18, the security device 12 may be programmed to transmit status data indicative of the lift.

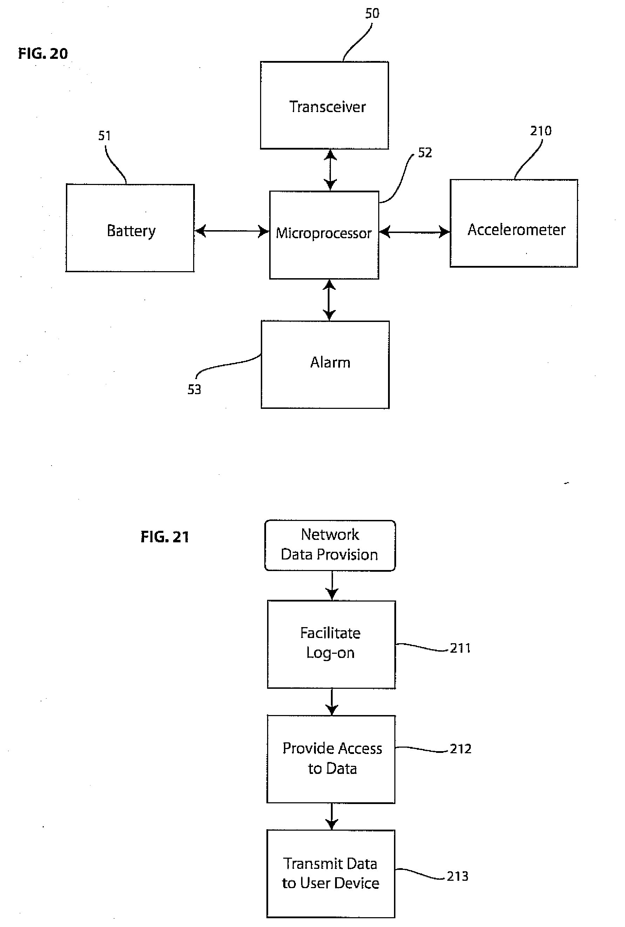

In another embodiment of the present invention, and as shown in FIG. 20, the security device 12 may have an accelerometer chip 210 that may detect a lift of the product 14. Further, the accelerometer chip 210 may determine motion data of the product 14, such as, for example, an indication of whether the product 14 has been moved, the time of movement, and/or the path of movement of the product 14.

As shown in FIG. 8, at step 81, the analytics module 11 may be programmed to monitor the status data transmitted from the security device 12. At step 82, the analytics module 11 may analyze the status data and/or determine a lift of the product 14 and/or a time of day of the lift of the product 14. As shown at step 83, the analytics module 11 may be programmed to store statistical data indicative of the lift and/or the time of day of the lift in the memory 41 for data collection and/or for data analysis.

After evaluating the product 14, a consumer may return the product 14 to the base 18 and/or to the display 16. The microprocessor 52 of the security device 12 may be programmed to detect a return of the product 14 to the base 18. After the return of the product 14, the security device 12 may be programmed to transmit status data indicative of the return of the product 14. At step 84, the analytics module 11 may analyze the data and/or determine a return and/or a time of day of the return of the product 14. As shown at step 85, the analytics module 11 may store statistical data indicative of the return and/or the time of the return in the memory 41 for data collection and/or for data analysis.

As shown in FIG. 8 at step 86, the analytics module 11 may be programmed to log a quantity of evaluations of the product 14. The product 14 may be evaluated, i.e., lifted from and/or returned to the display 16, multiple times within any time period. For each respective evaluation of the product 14, the security device 12 may be programmed to transmit status data indicative of each respective evaluation. The analytics module 11 may monitor and/or collect the status data for each respective evaluation. At step 87, the analytics module 11 may be programmed to sum each evaluation of the product 14 to determine the quantity of evaluations of the product 14. As shown at step 88, the analytics module 11 may be programmed to store statistical data indicative of the quantity of evaluations in the memory 41 for data collection and/or for data analysis.

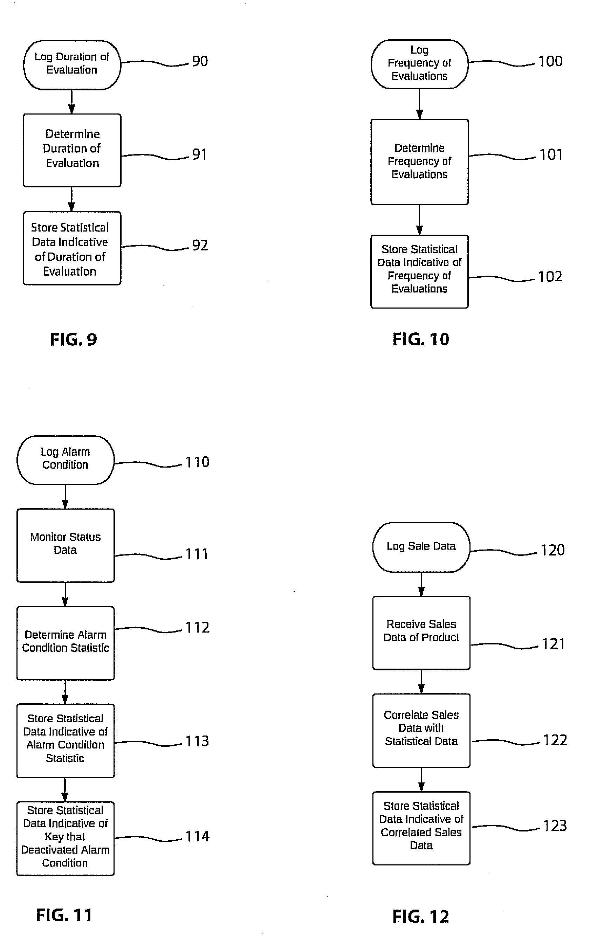

As shown in FIG. 9 at step 90, in an embodiment of the present invention, the analytics module 11 may be programmed to log a duration of an evaluation of the product 14. For example, as shown at step 91, the analytics module 11 may be programmed to determine the duration of an evaluation by subtracting the time of day of the lift of the product 14 from the time of day of the return of the product 14. In another embodiment, the clock 43 of the analytics module 11 may time the lift to determine the evaluation duration. As shown at step 92, the analytics module 11 may be programmed to store statistical data indicative of the duration of the evaluation in the memory 41 for data collection and/or for data analysis.

As shown in FIG. 10 at step 100, in an embodiment of the present invention, the analytics module 11 may be programmed to log a frequency of evaluations of the product 14. For example, as shown at step 101, the analytics module 11 may be programmed to determine the frequency of evaluations of the product 14 by dividing the quantity of evaluations of the product 14 by a time period. The time period may be, for example, an hour and/or a day. At step 102, the analytics module 11 may be programmed to store statistical data indicative of the frequency of evaluations in the memory 41 for data collection and/or for data analysis.

As shown in FIG. 11 at step 110, in an embodiment of the present invention, the analytics module 11 may be programmed to log an alarm condition. The security device 12 and/or the alarm module 13 may be programmed to transmit status data indicative of the alarm condition. Various instances may result in the alarm condition. For example, the microprocessor 52 of the security device 12 may be programmed to activate the alarm 53 if the security device 12 may be located in a position outside of the range of the emitter 15. Moreover, if the security device 12 may be removed from the product 14, the plunger switch may extend and/or activate the alarm 53 of the security device 12. Also, the security device 12 may be programmed to activate the alarm 53 if the USB cable 17 may be removed from the port of the product 14. Additionally, the alarm module 13 may be programmed to activate the alarm 72 of the alarm module 13 if the alarm module 13 fails to receive the high frequency signal 32 from the security device 12. The key 61 may deactivate the alarm condition of the security device 12 and/or the alarm module 13. The security device 12 and/or the alarm module 13 may be programmed to transmit status data indicative of the key 61 that may have been used to deactivate the alarm condition.

As shown at step 111, the analytics module 11 may be programmed to monitor the status data transmitted from the security device 12 and/or the alarm module 13. As shown at step 112, the analytics module 11 may be programmed to determine an alarm condition statistic, such as for example, a quantity and/or a frequency of alarm conditions of the security device 12. At step 113, the analytics module may be programmed to store statistical data indicative of the alarm condition. Further, as shown at step 114, the analytics module 11 may be programmed to store statistical data indicative of the key 61 that may have been used to deactivate the alarm 53 and/or the alarm 72 in the memory 41 for data collection and/or for data analysis.

As shown in FIG. 12 at step 120, in an embodiment of the present invention, the analytics module 11 may be programmed to log sale data. For example, as shown in step 121, the analytics module 11 may be programmed to receive sales data of the product 14. The sales data may be, for example, data indicative of the total number of sales of the product 14 at the retail store using the display 16. The retailer, for example, may input the sales data to the analytics module 11. Further, the analytics module 11 may read the sales data into the memory 41. As shown at step 122, the analytics module 11 may be programmed to correlate the sales data with statistical data, such as, for example, the quantity of evaluations of the product 14. As shown in step 123, the analytics module 11 may be programmed to store statistical data indicative of the correlated sales and statistical data in the memory 41 for data collection and/or for data analysis.

The analytics module 11 may be programmed to monitor status data that may be transmitted in the system 10 and/or to determine statistical data from the status data. In another embodiment of the present invention, the analytics module 11 may be programmed to monitor status data and/or to transmit the status data to the computer 19 that may be programmed to process the status data. For example, the analytics module 11 may be connected to the computer 19. In another embodiment of the present invention, the analytics module 11 may be programmed to wirelessly transmit status data and/or statistical data to the computer 19. The computer 19 may be programmed to determine statistical data of the product 14 and/or to display data to a user in, for example, the retail store. The analytics module 11 may be programmed to transmit the status data and/or the statistical data in real-time, and the computer 19 may be programmed to update the statistical data. The statistical data may be, for example, the quantity of evaluations, the frequency of evaluations and/or the duration of evaluations of the product 14. Further, the statistical data may be the number of alarm conditions of the product 14. Still further, the computer 19 may be programmed to display a battery status of the security device 12. The computer 19 may be programmed to display the statistical data corresponding to the product 14 that may be attached to the security device 12 and may be programmed to display a user assignable name of the security device 12. The user assignable name may be, for example, a designation of the product 14 that may be attached to the security device 12. For example, rather than displaying an internet protocol and/or a media access control address of the security device 12, the computer 19 may be programmed to display the statistical data in association with a user assignable name of the product 14 that may be attached to the security device 12.

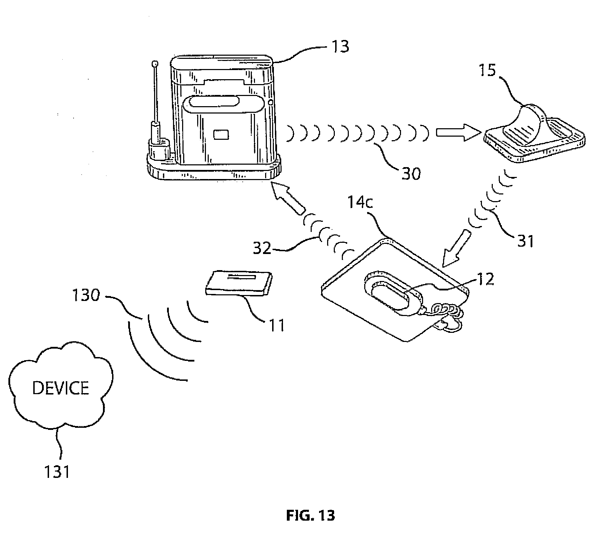

As shown in FIG. 13, in an embodiment of the present invention, the analytics module 11 may be programmed to wirelessly transmit data 130 to a remote device 131. The remote device 131 may be, for example, a server, a computer and/or a mobile device. The remote device 131 may be located, for example, at a location remote from the retail store. In an embodiment of the present invention, the analytics module 11 may be programmed to transmit the data 130 periodically, such as, for example, at a defined time interval. In another embodiment of the present invention, the analytics module 11 may be programmed to transmit the data 130 in response to a condition. For example, the analytics module 11 may be programmed to transmit an alarm update in response to an alarm condition of the security device 12 and/or the alarm module 13. The alarm update may be transmitted as, for example, an email and/or an SMS message. The data 130 may be, for example, the statistical data, such as the quantity of evaluations, the frequency of evaluations, the duration of evaluations and/or the correlated sales data of the product 14. In an embodiment of the present invention, the remote device 131 may log on and/or may access the analytics module 11 and may view the statistical data and/or the status data of the product 14 and/or the security device 12 in real-time. Further, the remote device 131 may request the statistical data from the analytics module 11 and/or the computer 19.

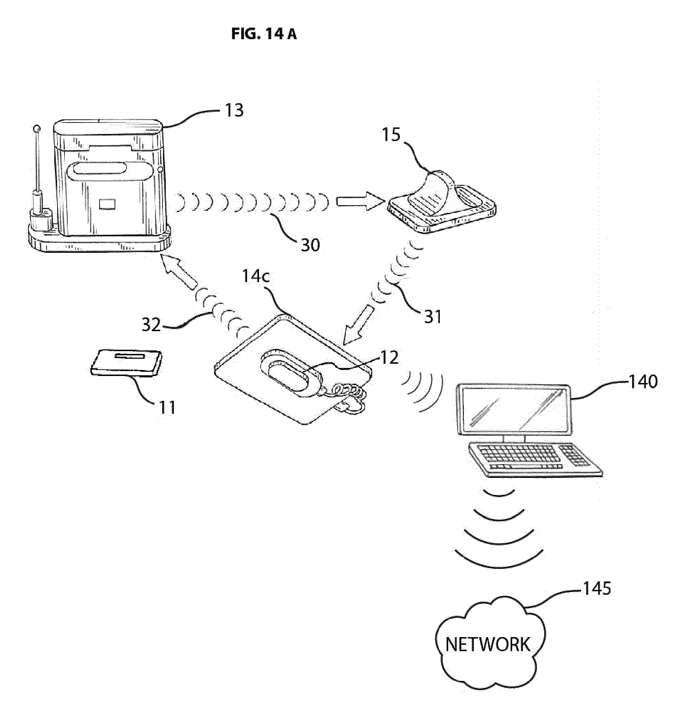

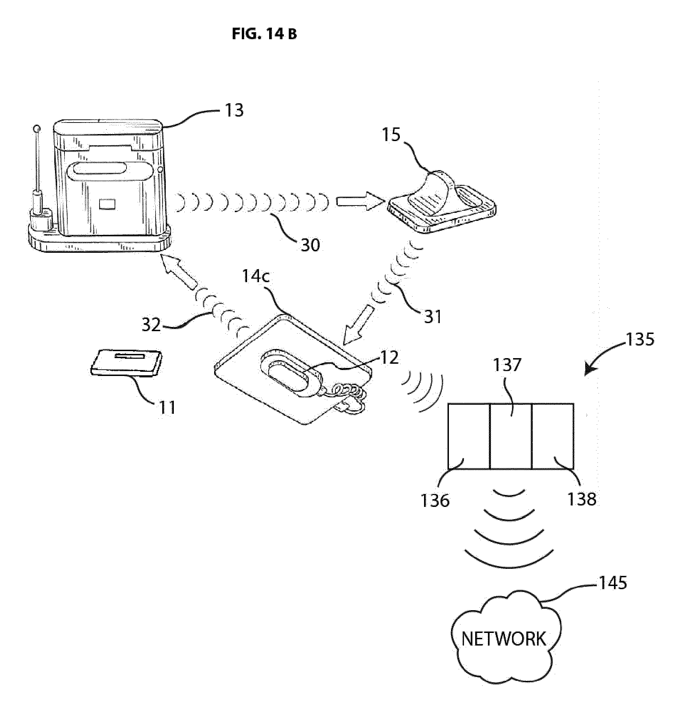

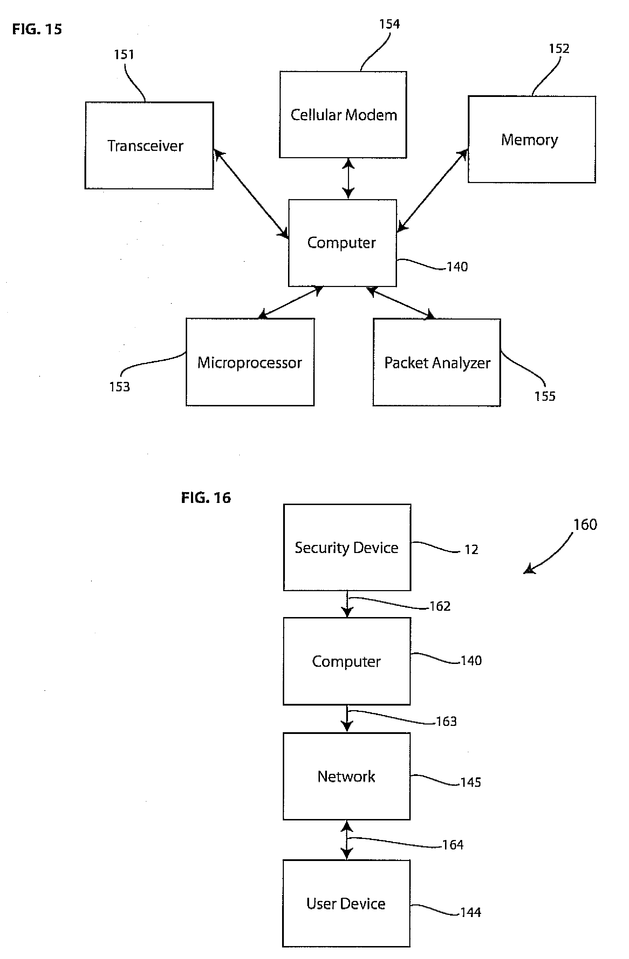

As shown in FIGS. 14A, 14B and 15, in an embodiment of the present invention, the security device 12 may be programmed to wirelessly transmit status data in the system 10 using a high frequency signal. As shown in FIG. 14A, in an embodiment, a computer 140 may wirelessly capture the status data transmitted throughout the system 10. In another embodiment, the computer 19 shown in FIG. 1 may perform the operations of the computer 140. The computer 140 may be located in the retail store and may connect to the analytics module 11.

In further embodiments, the computer 140 may be a server, laptop computer and/or the like. In yet another embodiment as shown in FIG. 14B, a gateway device 135 may perform the operations of the computer 140. The gateway device 135 may have a microprocessor 136 with an operating system such as, for example, Linux® (registered trademark of Linus Torvalds), a wireless module 137 for connecting to the security devices 12, and an internal cellular modem 138. The gateway device 135 may be a dedicated device without a user interface, and as such may be less susceptible than a laptop, for example, to tampering or theft in a retail environment. Further, the gateway device 135 may be less costly than other embodiments.

As shown in FIG. 15, the computer 140 may have several components with various functions. For example, the computer 140 may have a transceiver 151 to transmit and receive wireless radio signals. The computer 140 may transmit the status data to a network 145. The computer 140 may also have a memory 152, e.g. HDD, RAM, EEPROM that may store and/or may cache the status data. The computer 140 may also have a microprocessor 153. The memory 152 may provide the status data to the microprocessor 153. Further, the microprocessor 153 may be programmed to use the status data to determine the statistical data. In particular, the microprocessor 153 may process the status data to generate the statistical data. The status data and/or the statistical data may be stored in the memory 152. Further, the computer 140 may have a packet analyzer 155 to capture the status data transmitted from one or more of the security devices 12. The packet analyzer 155 may be computer hardware and/or software.

The computer 140 may communicate with the network 145 via wireless signals, e.g. Bluetooth® (registered trademark of Bluetooth SIG, Inc.), Wi-Fi® (registered trademark of Wi-Fi Alliance) and/or other radio frequency signals. For extended range applications, a cellular modem 154 as shown in FIG. 15 may also facilitate wireless communication between the computer 140 and the network 145. For example, the cellular modem 154 may provide 3G, 4G, LTE and/or the like connectivity between the computer 140 and the network 145. Further, the computer 140 may transmit the status data and/or the statistical data to the network 145 via the cellular modem 154. In an embodiment of the present invention, the network 145 may be a network of servers, i.e., the cloud and/or the internet.

FIG. 16 illustrates a block diagram of a system 160 for collecting data corresponding to the product 14 attached to the security device 12 in an embodiment of the present invention. For example, the status data and/or the statistical data may transmit between the components of the system 160 as shown in FIG. 16. For example, at step 162, the security device 12 may transmit status data throughout the system 160 and/or to the computer 140. The computer 140 may capture the status data, may store the status data, may analyze the status data, may determine statistical data, and/or may store the statistical data. Further, at step 163, the computer 140 may transmit the status data and/or the statistical data to the network 145. Moreover, at step 164, the network 145 may transmit and/or may provide access to the status data and/or the statistical data to a user device 144.

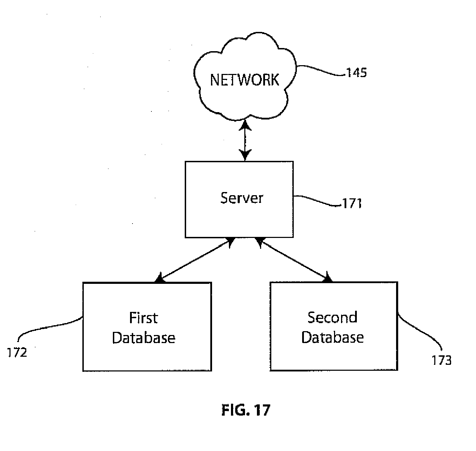

In an embodiment of the present invention, and as shown in FIG. 17, the network 145 may have a server 171 that facilitates cloud computing. The network 145 may have and/or may provide access to any number of servers 171. The server 171 may, for example, host a first database 172 and/or a second database 173. The network 145 may have any number of databases. Examples of the first database 172 may be database management systems databases, such as, for example, Oracle RDBMS® (registered trademark of Oracle Inc.), IBM DB2® (registered trademark of Microsoft Corporation), Microsoft SQL Server® (registered trademark of Microsoft Corporation) and/or the like. Examples of the second database 173 may be customer relationship management databases such as, for example, Microsoft Dynamics CRM® (registered trademark of IBM Corporation), SAP AG® (registered trademark of SAP Corporation), Oracle CRM® (registered trademark of Oracle Inc.) and/or the like. The first database 172 and/or the second database 173 may store status data and/or statistical data. For example, in an embodiment of the present invention, the first database 172 and/or the second database 173 may store statistical data pertaining to the product 14. Further, the first database 172 and/or the second database 173 may store data relating to the product 14. For example, data pertaining to the product 14 may be, for example, a designation of the product associated with the security device 12, e.g. iPhone 6® (registered trademark of Apple Inc.), a user assignable name of the security device 12, a protocol address of the security device 12, and/or the like. Additionally, the first database 172 and/or the second database 173 may store the statistical data associated with the product 14 and the designation data.

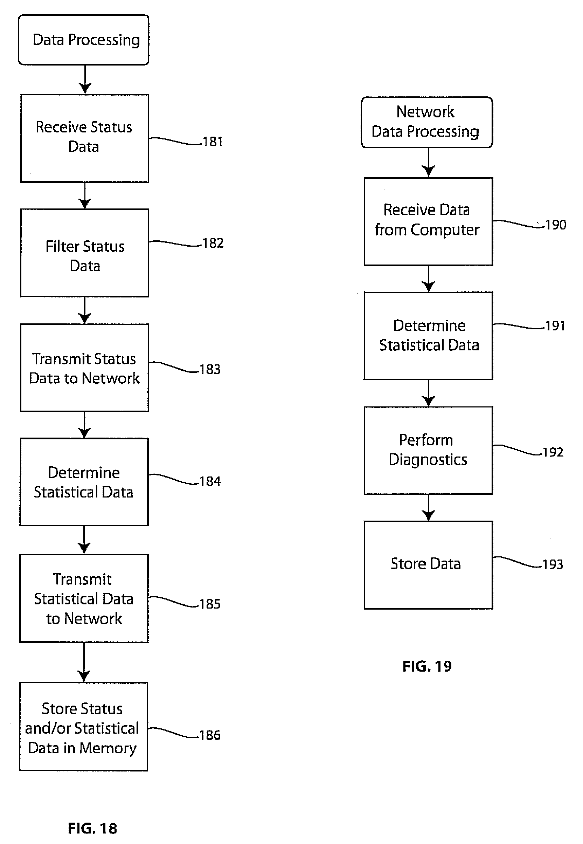

FIG. 18 illustrates a flowchart for processing data with the computer 140 in an embodiment of the present invention. For example, at step 181, the computer 140 may receive status data from the security device 12. The security device 12 may transmit the status data continuously and/or based on a condition, e.g. a lift and/or an alarm event. At step 182, the computer 140 may filter the status data, i.e., assign an importance to the status data. Moreover, the computer 140 may determine when and/or at what frequency the status data should be transmitted to the network 145. The computer 140 may determine that the status data may meet a certain predetermined threshold. If so, as shown at step 183, the computer 140 may transmit the status data to the network 145 based on the determination. At step 184, the computer 140 may process the status data to determine statistical data. The computer 140 may analyze some and/or all of the status data. At step 185, the computer 140 may transmit the statistical data to the network 145. The computer 140 may transmit the statistical data to the network 145 at defined intervals and/or in response to a condition. The statistical data and/or the status data may be stored in the memory 152 of the computer 140, as shown at step 186.

FIG. 19 illustrates a flowchart for processing data with the network 145 in an embodiment of the present invention. As shown in FIG. 19 at step 190, the network 145 may receive the status data and/or statistical data from the computer 140. At step 191, the network 145 may determine statistical data from the status data. The statistical data may be indicative of, for example, a number of lifts of the product 14, frequency of lifts of the product 14, time of day of lifts and/or returns of the product 14, and/or a number of alarm conditions of the product 14. At step 192, the network 145 may perform diagnostics on the status data and/or the statistical data and may analyze, for example, the RSSIs and/or TOFs of the various wireless signals transmitted through the system 10. At step 193, the network 145 may, for example, store the statistical data in the first database 172 and/or the second database 173. The statistical data may be stored with the designation of the product 14 associated with the security device 12.

FIG. 21 illustrates a flowchart for provisioning data with the network 145 in an embodiment of the present invention. As shown in FIG. 21, the network 145 may transmit status data and/or statistical data (collectively "data") to the user device 144. At step 211, the user device 144 may log-on to the network 145. At step 212, the user device 144 may access the data stored in the network 145. For example, the user device 144 may access a limited subset of the data depending upon an input of an acceptable user credential on the remote user device 144. Further, the user device 144 may access data related to similar products 14, e.g. iPhones®. At step 213, the network 145 may transmit the data to the user device 144. The network 145 may transmit an electronic message, for example, an email message, SMS message, and/or the like. The network 145 may transmit the data based on a schedule, based on a condition, and/or in response to a user request. The data may be aggregated as a status report. Further, various users may each access different data from the network 145 related to particular products 14 using user devices 144. For example, a particular user may access data related only to iPhones®. Other users may use other user devices 144 to access data from the network 145 related to different products of interest.

In summary, the system 160 may wirelessly collect data corresponding to the product 14 attached to the security device 12. The security device 12 associated with the product 14 may transmit wireless signals throughout the display area. The computer 140 remotely positioned from the security device 12 may receive the wireless signals and may store status data of the security device 12. The computer 140 may wirelessly transmit the status data to the network 145 which may determine statistical data from the status data. The network 145 may store the statistical data in the first database 172 and/or the second database 173 and may facilitate user access to the data. The network 145 may transmit the data to the user device 144.

It should be understood that various changes and modifications to the embodiments described herein will be apparent to those skilled in the art. Such changes and modifications may be made without departing from the spirit and scope of the present invention and without diminishing its attendant advantages. It is, therefore, intended that such changes and modifications be covered by the appended claims.

## Claims

1. A system for wirelessly collecting data corresponding to a product on a display, the system comprising:
a security device attached to the product;
a first transceiver associated with the security device wherein the first transceiver wirelessly transmits status data wherein the status data is indicative of a position of the product; and
an analytics module positioned remotely from the security device wherein the analytics module receives the status data and determines statistical data from the status data wherein the statistical data is indicative of a number of lifts of the product wherein a lift corresponds to movement of the product from the position.

2. An apparatus for wirelessly collecting data corresponding to a product connected to a security device wherein the product is in a static position and removable to a lifted position, the apparatus comprising:
an analytics module positioned remotely from the security device wherein the analytics module receives status data from the security device wherein the status data is indicative of whether the product is in the static position or the lifted position and further wherein the analytics module determines statistical data from the status data; and
a transceiver associated with the analytics module wherein the transceiver wirelessly transmits the statistical data.

3. A method for wirelessly collecting data corresponding to a product connected to a security device, the method comprising the steps of:
receiving a wireless signal from the security device wherein the wireless signal conveys status data wherein the status data is indicative of a position of the product;
determining a lift of the product wherein the lift corresponds to removal of the product from the position;
determining statistical data from the status data wherein the statistical data is indicative of a number of lifts of the product; and
wirelessly transmitting the statistical data.

4. The method of Claim 3 further comprising the step of:
determining an evaluation duration of the product that is indicative of a time of the lift of the product.

5. The method of Claim 3 further comprising the step of:
determining an alarm frequency that is indicative of a number of times an alarm associated with the security device is triggered.

6. A system for wirelessly collecting data corresponding to a product on a display, the system comprising:
a security device associated with the product wherein the security device wirelessly transmits status data wherein the status data is indicative of a position of the product;
a computer located remotely from the security device wherein the computer receives the status data from the security device;
a server located remotely from the computer wherein the server wirelessly receives the status data from the computer and determines statistical data from the status data wherein the statistical data is indicative of a number of lifts of the product wherein a lift corresponds to a change of the position of the product; and
a user device located remotely from the server wherein the user device wirelessly receives the statistical data from the server in response to a request from the user device.

7. An apparatus for wirelessly collecting data corresponding to a product on display, the apparatus comprising:
a security device associated with the product wherein the security device wirelessly transmits status data wherein the status data is indicative of a first position of the product;
a computer remotely located from the security device wherein the computer receives the status data from the security device and determines statistical data wherein the statistical data is indicative of a number of lifts of the product wherein a lift is indicative of a movement of the product from the first position to a second position; and
a network positioned remotely from the computer wherein the computer wirelessly transmits the statistical data to the network.

8. The apparatus of Claim 7 further comprising:
an accelerometer associated with the security device wherein the accelerometer detects the movement from the first position to the second position.

9. The apparatus of Claim 7 wherein the computer is a gateway device having a microprocessor, a wireless communication module that communicates with the security device, and an internal cellular modem that facilitates wireless transmission of the statistical data.

10. The apparatus of Claim 7 further comprising:
a database associated with the network and located remotely from the computer wherein the database wirelessly receives the statistical data from the computer and provides access to the statistical data.

11. The apparatus of Claim 7 further comprising:
a plurality of servers in the network wherein the servers facilitate cloud computing.

12. A method for wirelessly collecting data corresponding to a product associated with a security device, the method comprising the steps of:
receiving status data wirelessly from the security device wherein the status data is indicative of a position of the product;
determining statistical data from the status data wherein the statistical data is indicative of a number of lifts of the product wherein a lift is indicative of a movement of the product from the position;
transmitting the statistical data wirelessly to a remote server; and
transmitting an electronic message from the remote server to a remote user device wirelessly connected to the remote server wherein the electronic message has the statistical data.

13. The method of Claim 12 further comprising:
accessing the statistical data on the remote server based on an input of an acceptable user credential on the remote user device.

14. The method of Claim 12 further comprising:
accessing the statistical data on the remote server with the remote user device wherein the statistical data is associated with related products.

15. The method of Claim 12 further comprising:
performing a diagnostic on the remote server wherein the diagnostic is indicative of a wireless signal parameter of the security device.
